Europäisches Patentamt

European Patent Office

Office européen des brevets

(11) Publication number: **0 390 288**
**A1**

## (12) EUROPEAN PATENT APPLICATION

(21) Application number: **90200746.7**

(51) Int. Cl.⁵: **B62D 13/02**

(22) Date of filing: **29.03.90**

(30) Priority: **30.03.89 NL 8900781**

(43) Date of publication of application:
**03.10.90 Bulletin 90/40**

(84) Designated Contracting States:
**AT BE DE ES FR GB IT NL**

(71) Applicant: **HOSTA B.V.**
**Kon. Wilhelminahaven ZZ 26**
**NL-3134 KG Vlaardingen(NL)**

(72) Inventor: **Hofman, Adriaan Cornelis**
**c/o Hosta B.V., Kon. Wilhelminahaven ZZ 26**
**NL-3134 KG Vlaardingen(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) Trailer steering device.

(57) A device for steering at least one axle (29) of a trailer arranged to be coupled to a tractor by means of a coupling comprising a coupling disc (4) at the tractor and a coupling plate (1) at the trailer, the trailer axle (29) to be steered being provided with a steering means (28), a first sensor (30) being provided at said coupling for measuring the turning of the tractor through a given angle A relative to the longitudinal axis of the trailer and for feeding the measured data into a computer (32) which computes the desired trailing angle B of said trailer axle (29) associated with the measured turning angle A of the tractor, and passes relevant signals to said steering means (28) for said trailer axle (29), and wherein, according to the invention, the coupling between the tractor and the trailer comprises a lever element (18) which is pivotable about a fixed pin (19) in a frame (6) according to the tractor steering angle A by means of the tractor disc (4) through an adjustable transmission (10, 16, 17), which lever element (18) is formed as a driving element for said steering means (28) of said trailer axle (29), a second sensor (31) being provided at said coupling between the tractor and the trailer for determining the angular position (X) of said lever element (18) and for feeding measured data to said computer (32), which passes control signals to the adjusting means (10, 16) of said transmission (10, 16, 17) so that the angular position of the lever element (18) is adjusted to angle X which, through the steering means (28), provides the desired trailing angle B at the trailer axle (29).

FIG-1

## Trailer steering device

This invention relates to a device for steering at least one axle of a trailer arranged to be coupled to a tractor by means of a coupling comprising a coupling disc of the tractor and a coupling plate of the trailer, the trailer axle to be steered being provided with a steering means, a first sensor being provided at the coupling for measuring the turning of the tractor through a given angle A relative to the longitudinal axis of the trailer and for feeding the measured data into a computer which computes the desired trailing angle B of said trailer axis associated with the measured turning angle A of the tractor, and passes relevant signals to said steering means for said trailer axle, as disclosed in DE-A-1 957 662 (HUNGER)

The known steering arrangement for the trailer axle is arranged to adjust the trailer axle at an angle B which is at such a ratio to the steering angle A of the tractor that, as it is passing a bend, the trailer describes as narrow a path as possible and/or tyre wear is minimized. The ratio between angle A and B depends on several factors, such as the instantaneous magnitude of angle A and the type and number of axles of the trailer

In the known trailer axle steering device, in addition to the sensor at the coupling plate for measuring the steering angle A of the tractor, a sensor is provided at the steered trailer axle for measuring angle B. The computer calculates the amount of an angle B which has the ideal ratio to angle A, and gives corresponding steering pulses to the steering means for the trailer axle

One disadvantage of the known trailer steering device is that sensors at the trailer axles are in rather a vulnerable position and long wiring is needed. Another important drawback is that a power unit of relatively high capacity must be provided on the trailer for feeding the steering means for the trailer axles, and in the case of failure of the power unit the trailer gets out of control. Accordingly, the known trailer steering arrangement permits low speeds only.

It is an object of the present invention to provide a trailer axle control arrangement of the above type which avoids the disadvantages outlined above.

To this effect, according to the invention, the coupling between the tractor and the trailer comprises a lever element which is pivotable about a fixed pin in a frame according to the tractor steering angle A by means of the tractor disc through an adjustable transmission, which lever element is formed as a driving element for said steering means of said trailer axle, a second sensor being provided at said coupling for determining the angular position of the lever element and for feeding measured data into said computer, which passes control signals to the adjusting means of said transmission, so that the angular position of the lever element is adjusted to an angle X which, through said steering means, provides the desired trailing angle B at the trailer axle to be steered.

In the steering device according to the present invention, sensors are only needed at the coupling, where they are spaced a larger distance from the road surface, and hence are in a less vulnerable position.

An important advantage of the invention is that no power unit is needed on the trailer, because the greater part of the power needed for steering the trailer axle is provided by the rotation of the tractor relative to the trailer. In fact, as the tractor is steered through an angle, the lever element is already pivoted through an approximately corresponding angle, and the trailer axle is steered correspondingly through the lever element. It is only if the computer finds, through the relevant sensor, that the angular position of the lever element does not correspond with the ideal trailing angle B of the trailer axle under the circumstances, that the adjusting means for the transmission are steered to correct the angular position of the lever element. This requires little power only.

According to the invention, the adjusting means can be controlled by a control device and with compressed air from the brake system.

Although, in the device according to this invention, the lever element can in principle serve as a driving element for any known steering means for steering the trailer axle to be steered, such as cable or rod type steering means, the steering means may be constituted by hydraulic steering cylinders at the trailer axle, as is the case in the device disclosed in DE-A-1 957 662 (HUNGER), in which case, according to this invention, the lever element is coupled with command cylinders for the steering cylinders.

When the tractor is steered through an angle A, then, through the adjustable transmission, the lever element is also pivoted approximately through angle A, so that the command cylinders are operated exclusively by forces derived from the tractor disc. The rotation through angle A is sensed by the first sensor and passed to the computer. In the computer, the ideal curve is programmed which gives the pivot angle X of the lever associated with each tractor steering angle A and corresponding to the ideal trailer axle trailing angle B. The second sensor passes the actual angular position of the lever element to the computer and if there is a difference from the desired angle X the computer passes correction steering signals to the adjusting means of the transmission to the lever element

According to the invention, the transmission from the tractor disc to the lever element may be constituted by a combination of a dragger on the coupling plate, said plate being mounted for rotation in a frame connected to the trailer, and said dragger acting on the trailer disc, a cylinder mounted on the coupling plate for sliding movement parallel to the upper surface of said coupling plate, a sliding block mounted for rotation on the cylinder, and a guide slot for said sliding block, formed in said lever element.

When the tractor is steered through a curve, it takes along, through the dragger, the coupling plate mounted for rotation in the frame. The cylinder above the coupling plate also joins in the rotation, and, unless the sliding block carried by the cylinder is exactly in the centre of the coupling plate, the rotation of the coupling plate will result in a pivoting movement of the lever element, whereby the sliding block, while rotating, moves through the guide slot.

Corrections of the pivoting movement of the lever element are carried out by moving the cylinder, and hence the sliding block over the coupling plate by the control means which supply fluid to the piston

According to the present invention, the control device for the adjusting means may include a hydraulic reservoir to which the cylinder is connected through a control slide valve controllable by said computer and a pump, said pump being drivable by compressed air from the trailer brake system.

Under comparable conditions, this control device in the device according to the present invention only needs the supply of 0.35 kW through compressed air, whereas in the known device the power unit must be able to supply about 6.5 kW.

If, in the device according to this invention, the control device for the adjusting means fails, the trailing angle at the trailer axle is not ideal, it is true, but does have the correct order of magnitude.

One embodiment of the trailer steering arrangement according to the present invention will now be described, by way of example, with reference to the accompanying drawings. In said drawings,

Fig. 1 is a schematic top plan view of steering provisions on a trailer for a trailer axle to be steered;

Fig. 2 is a more detailed top plan view of the part of the steering device connected to the coupling plate; and

Fig. 3 is a cross-sectional view, taken on the line III-III of Fig. 2.

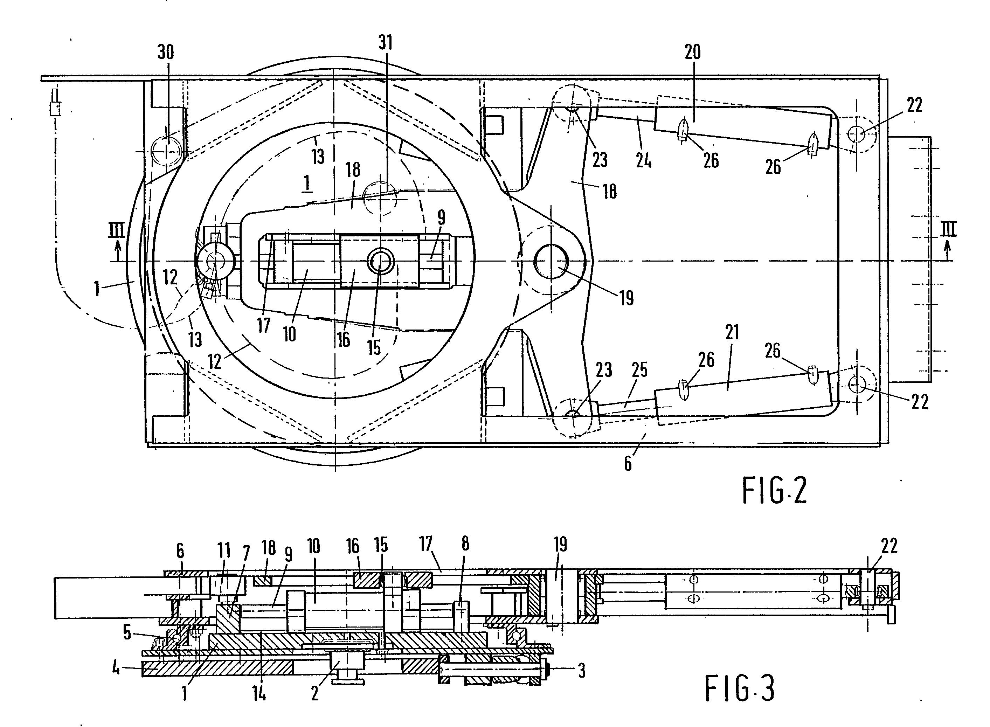

Referring to the drawings, in particular Figs. 2 and 3, there is shown a coupling plate 1 of a trailer, provided with a king pivot 2 and a dragger 3, by means of which plate 1 can be taken along in rotation by a tractor disc 4.

Coupling plate 1 is rotatably connected to an upper frame 6 by means of a ring bearing 5.

Mounted on coupling plate 1 are two head supports 7 and 8 for a piston rod 9 of an adjusting cylinder 10. One of the supports 7 is provided with a connection 11 for hydraulic conduits 12, 13 to the chambers of the double-acting cylinder 10, which is axially guided over plate 1 by a key 14.

Cylinder 10 carries through a rotary bearing 15 a sliding block 16 which is guided parallel to the upper surface of plate 1 in a slot 17 of a lever element 18, T-shaped in the embodiment shown, but optionally of other configuration, for example in the form of a disc. Lever element 18 is mounted in frame 6 for pivoting movement about a pin 19.

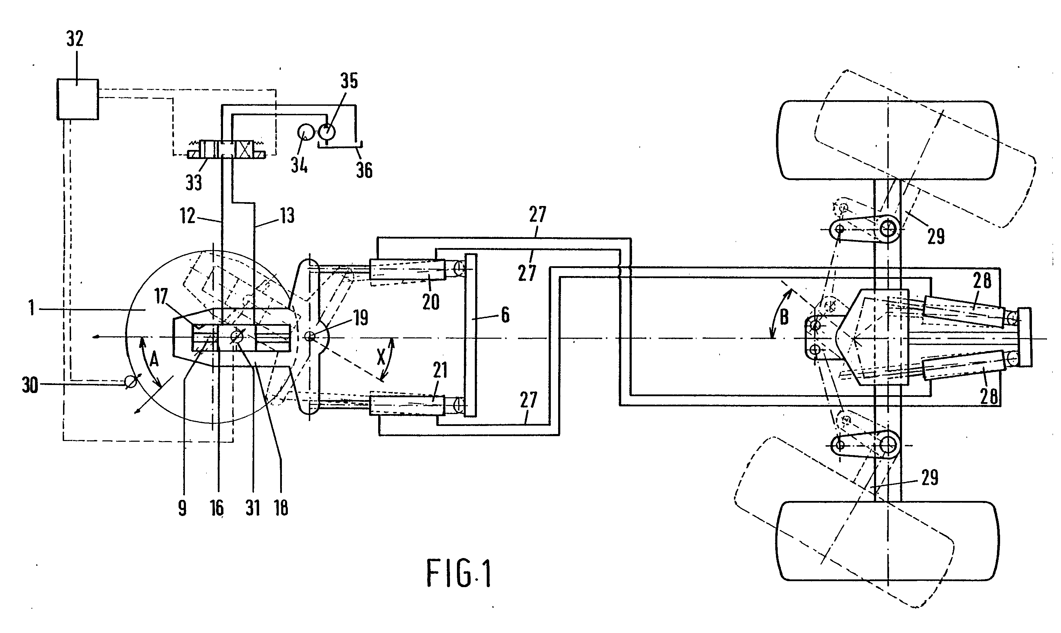

Command cylinders 20, 21 are pivoted to frame 6 about pins 22 and to lever element 18 about pins 23. Cylinders 20, 21 have piston rods 24 and connections 26 for hydraulic conduits 27 to steering cylinders 28 for steering trailer axles 29 (also see Fig 1).

Providing at coupling 1, 4 are two sensors 30 and 31, for respectively sensing the angular position of plate 1 and that of lever element 18.

Further referring to Fig. 1, the steering device includes a computer 32, a control slide valve 33, a compressed-air motor 34 and a hydraulic pump 35 with reservoir 36.

The apparatus operates as follows:

When the tractor is steered through an angle A, then via tractor disc 4 and dragger 3, coupling plate 1 is also turned through angle A, which is sensed by sensor 30, which passes this information to computer 32.

The rotation of coupling plate 1 is transmitted through adjusting cylinder 10 and sliding block 16 to lever element 18 in an angular ratio depending on the instantaneous position of sliding block 16 in guide slot 17. The rotation of lever element 18 is sensed by the second sensor 31, which passes this measured data also to computer 32.

The rotation of lever element 18 causes piston movements in command cylinders 20, 21 and hence fluid displacements in conduits 27 to steering cylinders 28 at the trailer axles 29 to be steered.

In computer 32, a ratio line which is ideal for the trailer in question is stored, which gives an optimum trailer axle trailing angle B associated with any tractor steering angle A, and also a pivot angle X of lever element 18 corresponding to the trailer axle angle.

In case the second sensor indicates that lever element is not in the ideal angular position X, computer 32 passes steering pulses to control valve 33 which by means of fluid supplied from reservoir 36 by pump 35 actuates adjusting cylinder 10 to move sliding block 16 in slot 17 of lever element 18 in such a manner that lever element 18 is pivoted to the desired angular position X, as a result of which trailer axles 29 reach the desired angular position B.

In summary, when the tractor is steered to move through an angle of A, and hence tractor disc 4 also moves through an angle A, lever element 18 is pivoted through an angle of the same order of magnitude, for which the required force is taken from the tractor disc. When it is found that the angular position of lever element 18 requires correction for it to occupy the angular position X, which brings about a desired trailer axle rotation B, this is effected by means of pump 35, which is operable with compressed air that can be withdrawn from the brake system.

Instead of the hydraulic power transmission of the lever element 18 to the trailer axles 29 to be steered, as described, use can be made of rods or cables.

## Claims

1. A device for steering at least one axle of a trailer arranged to be coupled to a tractor by means of a coupling comprising a coupling disc (4) at the tractor and a coupling plate (1) at the trailer, the trailer axle (29) to be steered being provided with a steering means (28), a first sensor (30) being provided at said coupling for measuring the turning of the tractor through a given angle A relative to the longitudinal axis of the trailer and for feeding the measured date into a computer (32) which computes the desired trailing angle B of said trailer axle associated with the measured turning angle A of the tractor (29), and passes relevant signals to said steering means (28) for the trailer axle (29), characterized in that the coupling between the tractor and the trailer comprises a lever element (18) which is pivotable about a fixed pin (19) in a frame (6) according to the tractor steering angle A by means of the tractor disc (4) through an adjustable transmission (10, 16, 17), which lever element (18) is formed as a driving element for said steering means (28) of said trailer axle (29), a second sensor (31) being provided at said coupling between the tractor and the trailer for determining the angular position (X) of said lever element (18) and for feeding measured data into said computer (32), which passes control signals to the adjusting means (10, 16) of said transmission (10, 16, 17) so that the angular position of the lever element (18) is adjusted to an angle X which, through said steering means (28), provides the desired trailing angle B at the trailer axle (29)

2. A device as claimed in claim 1, characterized in that the adjusting means (10, 16) are controlled by a control device (33) and with compressed air from the brake system.

3. A device as claimed in claim 1 or 2, in which the steering means for the trailer axle is constituted by hydraulic steering cylinders (28) at the trailer axle (29), characterized in that the lever element (18) is coupled with command cylinders (20, 21) for the steering cylinders (28).

4. A device as claimed in any of the preceding claims, characterized in that the transmission from the trailer disc (4) to the lever element (18) is constituted by a combination of a dragger (3) on the coupling plate (1), said plate being mounted for rotation (5) in a frame (6) connected to the trailer, and said dragger (3) acting on the trailer disc, a cylinder (10) mounted on the coupling plate for sliding movement parallel to the upper surface of said coupling plate, a sliding block (16) mounted for rotation on the cylinder (10), and a guide slot (17) for said sliding block, formed in said lever element.

5. A device as claimed in any of the preceding claims, characterized in that the control device for the adjusting means includes a hydraulic reservoir (36) to which the cylinder (10) is connected through a control slide valve (33) controllable by said computer (32) and a pump (35), said pump being drivable by compressed air from the trailer brake system

6. A device as claimed in any of claims 1, 2 or 5, characterized in that the lever element (18) drives the steering means for the or each trailer axle (29) through rods.

7. A device as claimed in any of claims 1, 2 or 5, characterized in that the lever element (18) drives the steering means for the or each trailer axle (29) through cables.

FIG·1

EP 0 390 288 A1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-2 200 739 (WARSTEINER ACHESENFABRIK) * Claims 1,2 * | 1 | B 62 D 13/02 |
| A | | 3-5 | |
| Y | WO-A-8 701 999 (MARTINET et al.) * Abstract; claim 1; figure 2 * | 1 | |
| A | CH-A- 481 784 (BERGISCHE ACHSENFABRIK) * Claims * | 1,2 | |
| A | EP-A-0 001 669 (EKSELSE KONSTRUKTIE WERKEN) * Abstract; figures 1,2 * | 1 | |
| A | FR-A-2 124 948 (RICKARDSON) * The entire document * | 1,6 | |
| A | DE-A-1 405 951 (FELBURN) * The entire document * | 1,6 | TECHNICAL FIELDS SEARCHED (Int. Cl.5) |
| A | US-A-3 168 332 (EYNON) * The entire document * | 1,6 | B 62 D |

The present search report has been drawn up for all claims

| Place of search | Date of completion of the search | Examiner |
|---|---|---|
| THE HAGUE | 29-05-1990 | SCHMAL R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)